# EUROPÄISCHE PATENTSCHRIFT

(11) **EP 0 511 688 B1**
(45) Veröffentlichungstag und Bekanntmachung des Hinweises auf die Patenterteilung: **22.06.1994**
(21) Anmeldenummer: 92109989.1
(22) Anmeldetag: 22.01.1991
(51) Int. Cl.: A01B 33/08

(54) **Montageverfahren für eine Kreiselegge**
Method for assembling a rotary harrow
Procédé d'assemblage d'une herse rotative

(30) Priorität: 06.02.1990 DE 4003463
(43) Veröffentlichungstag der Anmeldung: 04.11.1992
(62) Teilanmeldung aus: 91100728.4
(73) Patentinhaber: Amazonen-Werke H. Dreyer GmbH & Co. KG, D-49205 Hasbergen (DE)
(72) Erfinder: Gattermann, Bernd, W-2872 Hude 1 (DE); Gieseke, Reinhard, W-2872 Hude 1 (DE); Bahlmann, Hubert, W-4590 Cloppenburg (DE)

(56) Entgegenhaltungen:
- DE-U- 7 037 323
- FR-A- 2 335 141
- FR-A- 2 371 866
- GB-A- 2 029 184

## Beschreibung

Die Erfindung betrifft ein Montageverfahren für eine Kreiselegge gemäß des Oberbegriffes des Patentantanspruches 1.

Eine derartiges Montageverfahren für eine Kreiselegge ist beispielsweise durch das deutsche Gebrauchsmuster DE-U- 70 37 323 bekannt. Diese Kreiselegge weist ein sich quer zur Fahrtrichtung erstreckendes Gestell auf, in dem Lagergehäuse für die nebeneinander angeordneten Werkzeugkreisel gelagert sind. Diese Lagergehäuse sind in den Boden des Gestelles eingeschweißt und stützen sich ausschließlich an der unteren Wandung des Gestelles ab. Desweiteren ist zwischen der unteren Wandung und den Lagergehäusen auf der Unterseite des Gestelles eine Anzahl Knotenbleche angeordnet. Die Lagergehäuse werden zunächst alleine eingeschweißt und anschließend werden die Lager und die Kreiselwelle in den Lagergehäusen montiert. Jedes Knotenblech muß in aufwendiger Weise an dem Gestell angeordnet werden.

Der Erfindung liegt die Aufgabe zugrunde, auf einfache Weise eine sichere Abstützung der Lagergehäuse bei geringsten Fertigungs- und Montageaufwand zu erreichen.

Diese Aufgabe wird erfindungsgemäß durch die Maßnahmen gemäß des Kennzeichens des Patentanspruches 1 gelöst.

Aufgrund der erfindungsgemäßen Maßnahmen ist es somit möglich, daß in die Lagergehäuse, die in das Gestell eingeschweißt und mittels der Knotenbleche ebenfalls über Schweißverbindungen mit dem Gestell verbunden werden, bereits vor dem Einschweißen der Lagergehäuse in das Gestell, die Lager mit den Werkzeugkreiselwellen fertig montiert werden können, so daß in die Lagergehäuse bereits vor dem Schweißen die Lagergehäuse und die Werkzeugkreisel separat äußerst kostengünstig vorzumontieren sind. Die fertig montierten Lagergehäuse mit Lagergehäuse und Werkzeugkreisel werden komplett eingeschweißt. Eine nachträgliche Montage ist nicht erforderlich.

In äußerst vorteilhafter Weise sind die Lagergehäuse in die untere Wandung eingeschweißt und die Knotenbleche sind ebenfalls mit den Lagergehäusen und dem Gestell verschweißt. Hierdurch wird der Fertigungsaufwand auf ein Minimum reduziert. Die Maschine läßt sich äußerst kostengünstig herstellen. Die Schweißnaht an dem Gestell, die das Knotenblech mit dem Gestell verbindet, ist in Längsrichtung des Gestelles ausgerichtet. Somit können die Kräfte optimal in das Gestell eingeleitet werden. Eine opimale Anordnung der Knotenbleche ergibt sich dadurch, daß durch die Anordnung der Knotenbleche die Lagergehäuse sternförmig am Gestell abgestützt sind.

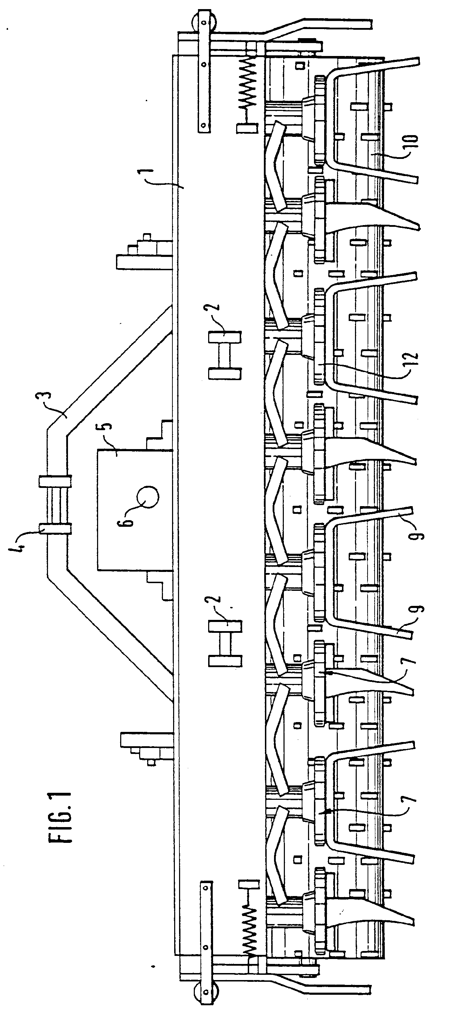

Weitere Einzelheiten der Erfindung sind der Beispielsbeschreibung und den Zeichnungen zu entnehmen. Hierbei zeigen
- Fig. 1: eine Kreiselegge in der Ansicht von vorne,

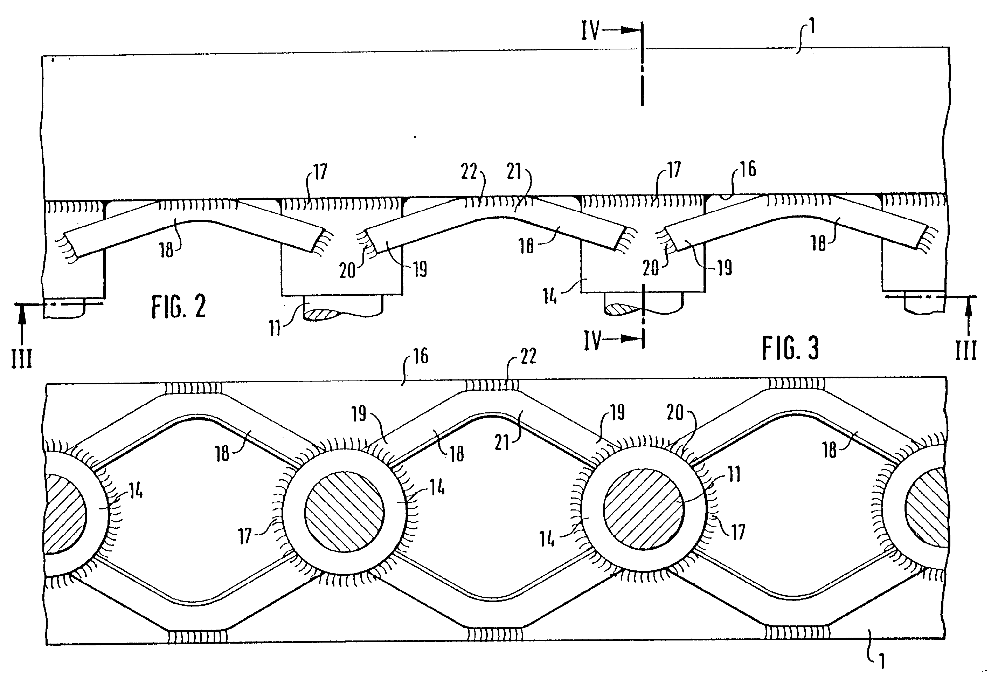

- Fig. 2: die Anordnung der Lagergehäuse und der V-förmigen Knotenbleche an dem Gestell der Kreiselegge in der Vorderansicht, ausschnittsweise und in vergrößerter Darstellung,
- Fig. 3: die Ansicht der Anordnung der Lagergehäuse und der Knotenbleche in der Ansicht III - III und

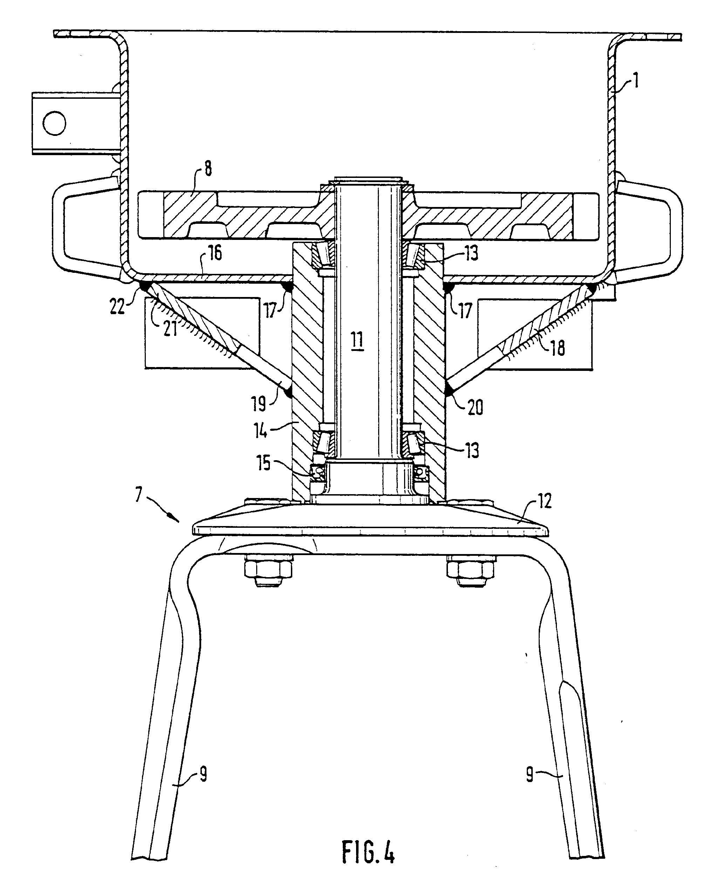

- Fig. 4: die Anordnung des Lagergehäuses mit Lager und Werkzeugkreiselwelle in dem Gestell in der Ansicht IV - IV.

Die Kreiselegge weist ein sich quer zur Fahrtrichtung erstreckendes Gestellteil 1 auf, an dessen Vorderseite die unteren Dreipunkkupplungselemente 2 und auf dessen Oberseite der Anbauturm 3 mit dem oberen Dreipunktkupplungselement 4 angeordnet ist. Desweiteren ist auf der Oberseite des Gestelles 1 das Hauptgetriebe 5 mit der Eingangswelle 6 angeordnet, die über eine Gelenkwelle mit der Zapfwelle des die Kreiselegge ziehenden Schleppers verbunden werden kann. Das Gestell 1 ist gleichzeitig als Getriebegehäuse für den Antrieb der Werkzeugkreisel 7 ausgebildet. In dem Gestellteil 1 befindet sich das Stirnradgetriebe 8, welches mit dem Hauptgetriebe 5 und den Werkzeugkreiseln 7 in Antriebsverbindung steht, so daß über das Hauptgetriebe 5 und das Stirnradgetriebe 8 die Werkzeugkreisel 7 in entgegengesetztem Drehsinn rotierend angetrieben werden können.

In dem Gestellteil 1 sind die Werkzeugkreisel 7 nebeneinander angeordnet und drehbar gelagert. An jedem Werkzeugkreisel 7 sind zwei Bodenbearbeitungszinken 9 angeordnet. Hinter dem Gestell 1 der Kreiselegge ist die höheneinstellbare Nachlaufwalze 10 angeordnet.

Die Werkzeugkreisel 7 weisen die Kreiselwellen 11 und den Werkzeugträger 12 auf, an dem die Zinken 9 befestigt sind. Die Kreiselwellen 11 sind jeweils über die Lager 13 in den Lagergehäusen 14 drehbar gelagert. Die Werkzeugkreisel 7 mit den Wellen 11 und den Werkzeugträgern 12 werden mit den Lagern 13 und den Dichtungen 15 vor der Montage der Lagergehäuse 14 in das Gestellteil 1 in die Lagergehäuse 14 montiert.

Die Lagergehäuse 14 werden dann gemeinsam mit den Werkzeugkreiseln 7, den Lagern 13 und den Dichtungen 15 in die untere Wandung 16 des Gestelles 1 mit der Schweißnaht 17 jeweils eingeschweißt. Zur Stabilisierung der Lagergehäuse 14 in der unteren Wandung 16 des Gestelles 1 sind zwischen den Lagergehäusen 14 und der unteren Wandung 16 des Gestelles 1 die Knotenbleche 18 angeordnet. Die Knotenbleche 18 sind V-förmig ausgebildet. Die freien Enden 19 der V-förmigen Knotenbleche 18 sind jeweils zwischen den Gehäusewandungen der benachbarten Gehäuse 14 angeordnet. Die Verbindung erfolgt mittels der Schweißnaht 20. Desweiteren sind die Querschenkel 21 der V-förmigen Knotenbleche 18 mit der äußeren unteren Wandung 16 des Gestelles 1 über die Schweißnaht 22 verbunden. Somit sind die Lagergehäuse 14 ausschließlich an der unteren Wandung 16 des Gestelles 1 abgestützt. Die Lagergehäuse 14 sind, wie bereits gesagt, über die Schweißnaht 17 jeweils in die untere Wandung 16 eingeschweißt. Die Knotenbleche 18 sind ebenfalls mit den Lagergehäusen 14 und dem Gestell 1 über die Schweißnähte 20 und 22 verschweißt.

Die Knotenbleche 18 sind derart an den Lagergehäusen 14 und dem Gestell 1 angeordnet, daß die Lagergehäuse 14 von den Knotenblechen 18 sternförmig abgestützt sind.

## Patentansprüche

1. Montageverfahren für eine Kreiselegge mit einem sich quer zur Fahrtrichtung erstreckenden Gestell, in dem mittels Lagergehäuse und Lagerung mehrere Werkzeugkreisel drehbar gelagert sind, wobei die Lagergehäuse in das Gestell eingeschweißt sind, dadurch gekennzeichnet, daß in die Lagergehäuse (14) vor dem Einschweißen der Lagergehäuse (14) in das Gestell (1) die Lager (13) und die Werkzeugkreisel (7) mit Welle (11) montiert werden, und daß die mit Lager (13) und Werkzeugwelle (11) sowie ggf. Dichtungen (15) versehenen Lagergehäuse (14) in das Gestell (1) eingeschweißt werden.

2. Montageverfahren nach Anspruch 1, dadurch gekennzeichnet, daß Knotenbleche (18) an die mit Lager (13) und Werkzeugkreisel (7) versehenen Lagergehäuse (14) angeschweißt werden.

## Claims

1. Method for assembling a rotary harrow having a frame, which extends transversely relative to the direction of travel and in which a plurality of tool rotors are rotatably mounted by means of bearing housings and bearing surface, the bearing housings being welded into the frame, characterised in that the bearings (13) and the tool rotors (7), with shaft (11), are assembled in the bearing housings (14) prior to the bearing housings (14) being welded into the frame (1), and in that the bearing housings (14), which are provided with bearing (13) and tool shaft (11) as well as possibly seals (15), are welded into the frame (1).

2. Assembly method according to claim 1, characterised in that connection plates (18) are welded to the bearing housings (14), which are provided with bearing (13) and tool rotor (7).

## Revendications

1. Procédé d'assemblage d'une herse rotative comportant un châssis s'étendant transversalement à la direction de déplacement, et qui reçoit à rotation plusieurs outils rotatifs à l'aide d'un carter de palier et d'un palier, les carters de palier étant soudés sur le châssis, procédé caractérisé en ce que l'on monte sur les carters de palier (14), les paliers (13) et les outils rotatifs (7) avant de souder le carter de palier (14) sur le châssis (1) et on soude au châssis (1) les carters de palier (14) munis du palier (13) et de l'axe (11) de l'outil ainsi que le cas échéant les joints (15).

2. Procédé d'assemblage selon la revendication 1, caractérisé en ce que l'on soude des goussets d'assemblage (18) sur le carter de palier (14) muni du palier (13) et de l'outil rotatif (7).
